# EUROPEAN PATENT SPECIFICATION

(11) **EP 3 495 901 B1**
(45) Date of publication and mention of the grant of the patent: **15.04.2020**
(21) Application number: 17205855.4
(22) Date of filing: 07.12.2017
(51) Int. Cl.: G05B 19/042, H05B 37/02

(54) **METHOD FOR INITIALIZING AN APPLIANCE IN A DELIVERY STATE AND APPLIANCE**
VERFAHREN ZUR INITIALISIERUNG EINER ANWENDUNG IN EINEM LIEFERZUSTAND UND VORRICHTUNG
PROCÉDÉ D'INITIALISATION D'UN APPAREIL DANS UN ÉTAT DE LIVRAISON ET APPAREIL

(43) Date of publication of application: 12.06.2019
(73) Proprietor: FRIWO Gerätebau GmbH, 48346 Ostbevern (DE)
(72) Inventor: HEINE, Victor, 48145 Münster (DE)
(74) Representative: Grünecker Patent- und Rechtsanwälte PartG mbB

(56) References cited:
- EP-A1- 2 734 013
- US-A- 5 352 957
- US-A1- 2009 219 305
- US-A1- 2011 035 029

## Description

The present invention relates to a method for initializing an appliance in a delivery state and to an appliance initialized with the corresponding method.

An appliance, for example a power supply or a light source, can supply an adjustable output value, for example an output voltage, an output current, a light color, or a light intensity. In particular, such an appliance with variable output value is provided with a variable control mechanism, wherein the variable control mechanism is user adjustable for controlling the adjustable output value.

In general, a user adjusts a user adjusting element, for example a tap changer, a control knob, an actuator, or the like, connected to the variable control mechanism for controlling the output value. Important is that the manufacturer delivers the appliance in a delivery state. Until a user adjusts the variable control mechanism the appliance operates as delivered. In other words, the delivery state of the appliance is different to a state of the appliance when a user adjusts the variable control mechanism for the first time. For example, the appliance outputs a delivery output value until the user adjusts the variable control mechanism.

Furthermore, the need exists that the appliance provides a user a predetermined output value after unpacking. In other words, the appliance is adapted for plug and play start-up by the user without adjusting the output value. Additionally, the need exists that the manufacturer determines whether the appliance is in the delivery state or not in order to check parameters of the appliance for quality assurance. For example, if the appliance is in the delivery state the output value is a predetermined delivery output value. In other words, each appliance in a series will be delivered with the same delivery output value.

Consequently, a uniform output value can, for example, improve quality control for the manufacturer and simplify commissioning procedures for the user.

State of the art is that each appliance in a series is adjusted manually to deliver the appliance with a predetermined delivery output value.

US 5 352 957 A directs to a control system for a plurality of appliances in distributed arrangement, in particular lighting fittings, having a command generator, a receiver associated with each appliance, a control line which connects the command generator to each receiver, and a first memory in each receiver in which an operational address A2 for the associated appliance can be stored. A control part is provided in each receiver by means of which the appliance associated therewith can be controlled by the command generator if it has first been activated by selection of the operational address A2 of the appliance associated therewith. The control system for appliances that are to be in distributed arrangement is intended to make a particularly simple initiation of operations possible. This is achieved by the fact that the operational address A2 in the first memory of each receiver can be written-in by electrical signals, and that an electrically readable second memory is provided which contains a receiver-specific original address.The object underlying the present invention is to provide a method for initializing an appliance in a delivery state as defined in claim 1 and an appliance as defined in claim 9. The method allows a control unit to automatically determine whether the appliance is in a delivery state or not. A further object is that the manufacturing process of such an appliance is simplified. Additionally, an object of the present invention is that the appliance provides a more precise output value. At the same time is an object that the appliance can be assembled irrespective of the tolerances of the electrical components, for instance the tolerances of the potentiometer used to assemble the variable control mechanism. A further object of the present invention is to reduce the process steps to manufacture the appliance.

At least one of these objects is solved by the subject matter of the independent claims.

Advantageous embodiments of the invention are the subject matter of the dependent claims.

According to one embodiment, a method for initializing an appliance in a delivery state, wherein the appliance has at least one adjustable output value, comprises the steps of
- providing a control unit connected to a memory unit and providing a variable control mechanism, wherein the variable control mechanism is user adjustable for controlling the adjustable output value;
- storing a first code word in the memory unit, wherein a predetermined delivery output value of the appliance is associated to the first code word, and
- changing, by the control unit, the first code word to a second code word when the variable control mechanism is adjusted by the user.

The stored first code word, which can be a flag, a marker, or any storable information such as at least one bit, indicates that the appliance is in a delivery state. A code word is a particularly simple and efficient way to store the delivery status information of the appliance.

In a further process step the first code word is changed to a second code word. The second code word can be also a flag, a marker, or any storable information such as at least one bit. The second code word, which differs from the first code word by at least one bit, indicates that the appliance is not in the delivery state. A person skilled in the art knows that changing the code word comprises clearing a flag, overwriting the code word, replacing an index pointing to the code word, or the like. Changing the code word is a particularly efficient way to replace the information indicative for the status of the appliance. Thus, the information of the appliance status can be stored and retrieved efficiently. For example, the control unit can determine the status of the appliance by verifying only the code word.

Further, the first code word is not changed until a condition is fulfilled. In particular, the first code word is changed when the variable control mechanism is adjusted by the user. In other words, the user adjusts the variable control mechanism and the appliance determines that the variable control mechanism has been adjusted. Advantageously, the control unit verifies whether the variable control mechanism fulfills a predetermined condition. For example, the control unit verifies if the variable control mechanism has been changed by a predetermined amount, has been adjusted for a predetermined time, or the like.

After changing the code word, the second code word is permanently stored in the memory unit. In other words, this change is one-directional. In more detail, the first code word can only be changed if the first code word is stored. Once the first code has been changed for the first time it is not changed again. Consequently, one code word is sufficient for indicating whether the appliance is in the delivery state or not.

According to an advantageous embodiment, the variable control mechanism controls the appliance to output the adjusted output value adjusted by the user, if the first code word is changed to the second code word. In other words, the status of the appliance is investigated in order to verify whether the output value of the appliance is controlled by the variable control mechanism. According to a particularly advantageous embodiment, the method further comprises the steps of sensing of an adjusted value, by the control unit, adjusted at the variable control mechanism and calculating the output value, by the control unit, using same adjusted value. Thus, the control unit can calculate based on the sensed adjusted value, e.g. a voltage, any adjustable output value, e.g. an output current.

Additionally or alternatively, the control unit controls the appliance to output the predetermined delivery output value, until the first code word is changed. Thus, the appliance outputs the predetermined delivery output value, if the appliance is in the delivery state. In other words, the control unit decides whether the adjustable output value of the appliance is bypassed with the predetermined output value or not.

Additionally or alternatively, the method further comprises the steps of sensing an adjusted value, by the control unit, adjusted at the variable control mechanism and changing the first code word to the second code word, when the adjusted value fulfills a predetermined condition. The control unit measures an adjusted value, also referred to as the actual setting, of the variable control mechanism and verifies if the measured adjusted value of the variable control mechanism fulfills a predetermined condition. Thus, by analyzing the adjusted value of the variable control mechanism the appliance detects when a user adjusts the variable control mechanism. According to an advantages embodiment, the control unit changes the first code word to the second code word when a relation of the adjusted value and a trim setting fulfills a predetermined condition, the trim setting being a setting of the variable control mechanism in the delivery state. Thus, the control unit can decide by comparing the trim setting with the adjusted value, whether the appliance is in the delivery state or not. Advantageously, the trim setting has been stored in advance by the manufacturer in the memory unit.

According to a particularly advantageous embodiment, the control unit compares each of the trim setting and the adjusted value with a predetermined setting of the variable control mechanism. Advantageously, in a first step the trim setting is compared with a predetermined setting and in a second step the adjusted value is compared with the same predetermined setting. The predetermined setting can be calculated by the control unit based on predetermined values of the variable control mechanism. Predetermined values of the variable control mechanism are, for example, a minimum value and a maximum value of the variable control mechanism. Comparing the trim setting and the adjusted value each with the predetermined setting enables to specify more precisely the condition when the code word is changed.

Additionally or alternatively, the process of changing the first code word to the second code word is irreversible. According to a particularly advantageous embodiment, the control unit overwrites the first code word with the second code word. Thus, the code word can be stored in a particularly save and efficient way. For example, the memory unit can comprise an EEPROM for saving the code word.

According to a particularly advantageous embodiment, the adjustable output value of the appliance is at least one of an output voltage, an output current, an output luminous intensity, and an output light color.

According to one embodiment, an appliance with at least on adjustable output value comprises a control unit connected to a memory unit and a variable control mechanism, wherein the variable control mechanism is user adjustable for controlling the adjustable output value, and wherein the appliance is initialized in a delivery state according to the above described method.

According to one embodiment, the memory unit comprises an EEPROM for storing a code word.

Additionally or alternatively, the variable control mechanism comprises a user adjusting element, which is user adjustable, and a conversion element for converting a setting adjusted at a user adjusting element to an adjusted value, wherein the adjusted value is sensed by the control unit. Advantageously, the conversion element comprises a potentiometer.

Further, according to another embodiment, the adjustable control unit comprises a microprocessor.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **Fig. 1**: is an overall configuration diagram of the appliance;
- **Fig. 2**: is a configuration diagram of the appliance according to one embodiment;
- **Fig. 3**: is a flow chart depicting a sequence for preparing the appliance;
- **Fig. 4**: is a flow chart depicting a sequence for operating the appliance;
- **Fig. 5**: is a flow chart depicting a further sequence for operating the appliance.

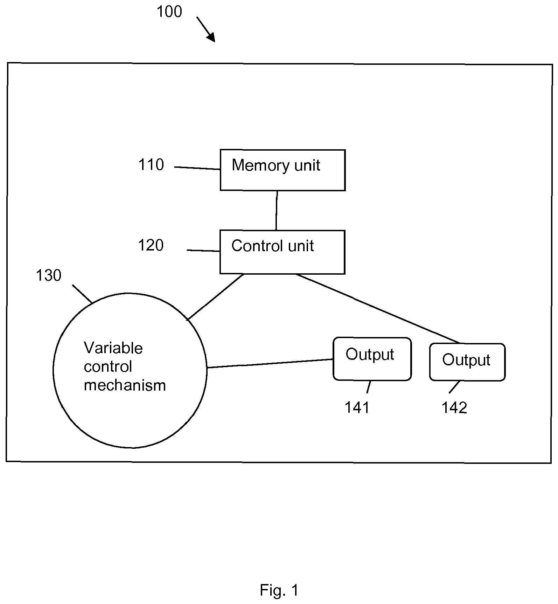

The present invention will now be explained in more detail with reference to the Figures and firstly referring to Fig. 1, which shows an overall configuration of the appliance 100. The appliance 100 comprises a memory unit 110, a control unit 120, a variable control mechanism 130, and outputs 141 and 142.

The variable control mechanism 130 is connected to the control unit 120 and the variable control mechanism 130 is connected to the output 141. The control unit 120 is connected to the memory unit 110 and to the output 142. Although not shown in the drawings, the output 141 can comprise a plurality of outputs 141 and the output 142 can comprise a plurality of outputs 142.

The memory unit 110 is adapted for storing data. Stored data may be any sequence of bits. Stored data may comprise delivery settings of the appliance 100, delivery setting of the control unit 120, or delivery settings of the variable control mechanism 130. Further, the memory unit 110 can store a delivery output value that can be outputted at output 142. The data can be stored via the control unit 120 in the memory unit 110, data can be stored in advance in the memory unit 110, or data can be stored by a memory storing unit, which is not shown in the figures.

The control unit 120 can retrieve data from the memory unit 110, store data in the memory unit 110, and change data in the memory unit 110. Further, the control unit 120 can retrieve data from the variable control mechanism 130 and send data to at least one output 142. In particular, the control unit 120 can sense an adjusted value adjusted at the variable control mechanism 130. The control unit 120 can calculate an output value for the output 142 based on the sensed adjusted value adjusted at the variable control mechanism 130.

The variable control mechanism 130 can be adjusted by a user for controlling the output value of the output 141 or the output 142. The output 141 is directly controlled by the variable control mechanism 130 and the output 142 is controlled indirectly by the variable control mechanism 130.

The output 141 and the output 142 can supply an output value that is controlled by the variable control mechanism 130. The output value of the output 142 is calculated by the control unit 120. Calculating the output value can comprise converting an adjusted value with a first characteristic, e.g. a voltage, to an output value with a second characteristic, e.g. an output voltage, an output current, an output luminous intensity, and an output light color. Calculating the output value can additionally or alternatively comprise computing the output value by, for example, multiplying the adjusted value with a certain constant.

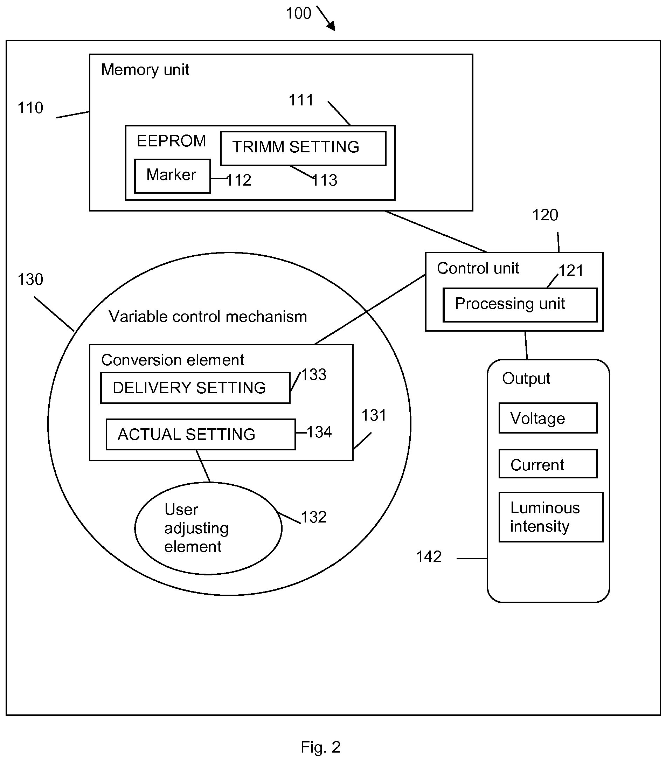

As shown in Fig. 2, the variable control mechanism 130 comprises a user adjusting element 132 and a conversion element 131. The user adjusting element 132 is adjustable by a user, for example, by applying a mechanical force. The user adjusting element 132 is connected to the conversion element 131. The conversion element 131 converts an actual setting 134 of the user adjusting element 132 to an adjusted value, which can be sensed and processed by the control unit 120. The conversion element 131 is connected to the control unit 120. Also not shown in Fig. 2, the conversion element 131 can directly output the adjusted value at an output 141.

The user adjusting element 132 can be a switching element, for example a tap changer, a control knob, an actuator, or the like. A user can adjust the user adjusting element 132 by applying, for example, a mechanical force, an electrical force, a magnetic force, or the like.

The conversion element 131 can comprise a potentiometer, which can supply a voltage depending on the actual setting 134 to the control unit 120. Further, the conversion element 131 can provide a delivery setting 133. The delivery setting 133 is calculated based on predetermined values of the conversion element 131. Predetermined values of the conversion element 131 comprise, for example, the minimum and maximum value of the user adjustable range. For example, a potentiometer with an adjustable range from 10 V to 20 V can, for example, have a delivery setting of 15 V.

The control unit 120 can comprise a processing unit 121, such as a microprocessor for controlling the appliance 100.

As shown in Fig. 2, the memory unit 110 comprises an electrically erasable programmable read-only memory (EEPROM) 111. At least one of the memory unit 110 and the EEPORM 111 stores a marker 112 and a trim setting 113.

The trim setting 113 is an actual setting 134 of the conversion element in the delivery state of the appliance. The marker is a code word indicating whether the appliance is in a delivery state or not.

The output 142 controlled by the control unit 120 can supply an output value such as an output voltage, an output current, an output luminous intensity, or an output light color.

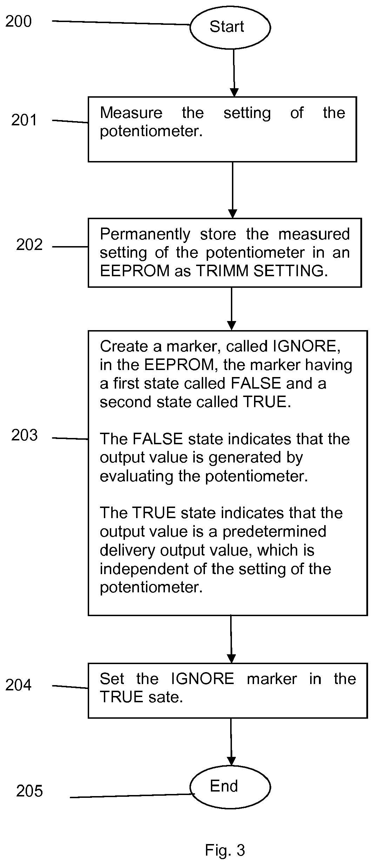

Fig. 3 shows a sequence for storing a trim setting 113 in the memory unit 110. The sequence starts at step 200. The sequence is performed before the appliance is delivered to a user.

Process step 201 comprises sensing an actual setting 134, also referred to as adjusted value, of the variable control mechanism 130. The actual setting 134 is a value indicative for the actual position of the variable control mechanism 130. In other words, an actual position of the user adjusting element 132 is converted by the conversion element 131 in the actual setting 134. The actual setting 134 can be sensed and processed by the control unit 120. According to one embodiment, the actual setting 134 corresponds to a voltage value of the potentiometer.

Process step 202 comprises storing permanently the measured actual setting 134 as trim setting 113 in the EEPROM 111. Additionally or alternatively, the actual setting 134 is stored as trim setting in the memory unit 110. A storing unit, which is not shown in the figures, stores the trim setting 113 in the memory unit 110 and/or the EEPROM 111. Alternatively or additionally, the control unit 120 stores the trim setting in the memory unit 110.

Process step 203 comprises creating a marker in the EEPROM 111. Additionally or alternatively, the marker is created in the memory unit 110. According to one embodiment the marker is called IGNORE and the marker has a first state called FALSE and a second state called TRUE.

The FALSE state indicates that the output value at the output 142 of the appliance 100 is generated by evaluating the variable control mechanism 130 by the control unit 120. According to one embodiment, an adjusted value at the conversion element 131 is sensed and evaluated for generating the output value at the output 142.

The TRUE state indicates that the output value at the output 142 is a predetermined delivery output value, which is independent of the variable control mechanism 130. Additionally a creation unit, which is not shown in the figures, creates the marker in the memory unit 110 and/or the EEPROM 111. Alternatively or additionally, the control unit 120 creates the marker in the memory unit 110.

Finally, process step 204 comprises setting the IGNORE marker in the TRUE sate. A setting unit, which is not shown in the figures, sets the marker in the memory unit 110 and/or the EEPROM 111 in the TRUE state. Alternatively or additionally, the control unit 120 sets the marker in the memory unit 110. In step 205 the procedure ends and the appliance 100 is in a delivery state.

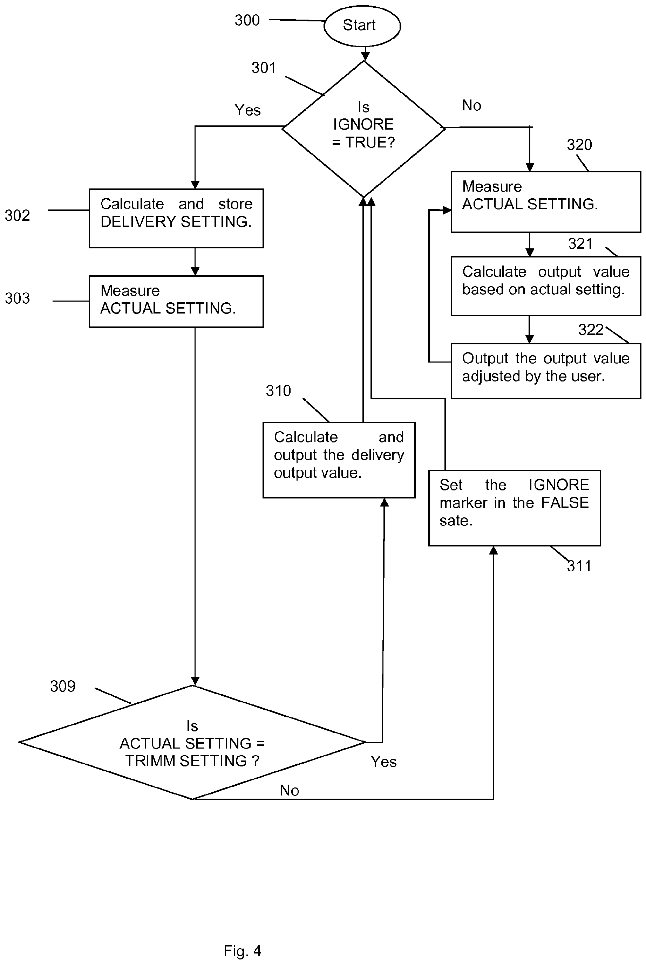

Fig. 4 shows the sequence for operating the appliance 100, which is either in a delivery state or not. The sequence starts at step 300 by switching on the appliance 100 at an on/off switch, which is not shown in the figures. Preferably, the sequence is operated by the control unit 120 and preferably by the microprocessor.

Process step 301 comprises verifying the code word stored in the memory unit 110. If it is verified that the code word called IGNORE is in the status TRUE, the sequence proceeds with step 302.

Process step 302 comprises calculating a delivery setting 133. The delivery setting 133, also referred to a predetermined setting, is based on predetermined values of the conversion element 131. Predetermined values of the conversion element 131 are, for example, the minimum and maximum value of the adjustable range of the conversion element 131. The delivery setting can, for example, be stored in the memory unit 110 or can be calculated by the control unit 120.

Process step 303 comprises sensing an actual setting 134 of the variable control mechanism 130. The actual setting 134 is sensed in a similar way as described with reference to process step 201.

Process step 309 comprises setting the trim setting 113 into relation with the actual setting 134. The trim setting 113 is retrieved from the memory unit 110. The trim setting 113 has been stored in the memory unit 110 in advance according to the process described with reference to Fig. 2. Process step 309 comprises, for example, comparing the trim setting 113 with the actual setting 134. If the trim setting 113 is equal to the actual setting 134 the process continues with process step 310. If the trim setting 113 is not equal the actual setting 134 the process continues with process step 311. For a person skilled in the art is clear that the invention is not limited to the trim setting being equal to the actual setting. For example, equal can be substituted with similar, less than, greater than, or the like. For example, it might be determined that the actual setting 134 is not within a trim region, the trim region ranging from the trim setting minus a predetermined value to the trim setting plus a predetermined value.

In the case that in process step 309 it is determined that the actual setting equals the trim setting the sequence proceeds with process step 310. The process step 310 comprises outputting at the output 142 the delivery output value. The delivery output value is a predetermined value. The delivery output value can be stored in the memory unit 110. Process step 310 can additionally comprise calculating the delivery output value by the control unit 120. The predetermined output value can be calculated based on predetermined values of the conversion element 131. Predetermined values of the conversion element 131 are, for example, the minimum and maximum value of the adjustable range of the conversion element 131.

In the case that in process step 309 is determined that the actual setting is not equal the trim setting the sequence proceeds with process step 311. The process step 311 comprises setting the INGNORE marker in the state FALSE. The marker is, for example, a code word stored in the memory unit 110 that is changed by the control unit 120.

After process step 310 or process step 311 the sequence returns to process step 301. Thus, starting with process step 301 the process steps 302, 303, 309, 310, and 311 build a delivery sequence for verifying and operating the appliance in a delivery state. For a person skilled in the art is clear that process step 310 can be also executed after process step 301 and before process step 309 in this delivery sequence. The delivery sequence is operated until it is determined that the appliance is not in the delivery state. If the appliance is not in the delivery state the code word is changed in process step 311.

If it is verified that the code word called IGNORE is in the status FALSE, the sequence proceeds with step 320.

Process step 320 comprises sensing an actual setting 134 of the variable control mechanism 130. The actual setting is sensed in a similar way as described with reference to process step 201 or process step 303.

Process step 321 comprises calculating an output value. The control unit 120 calculates the output value based on the actual setting sensed in process steps 321.

Process step 322 comprises outputting the output value calculated in process step 321 at the output 142. Then, the sequence returns to process step 320.

Process step 320, 321, and 322 build an operation sequence for operating the appliance when the appliance is not in the delivery state. In the operation state the appliance outputs an output value adjusted by the user at the variable control mechanism 130.

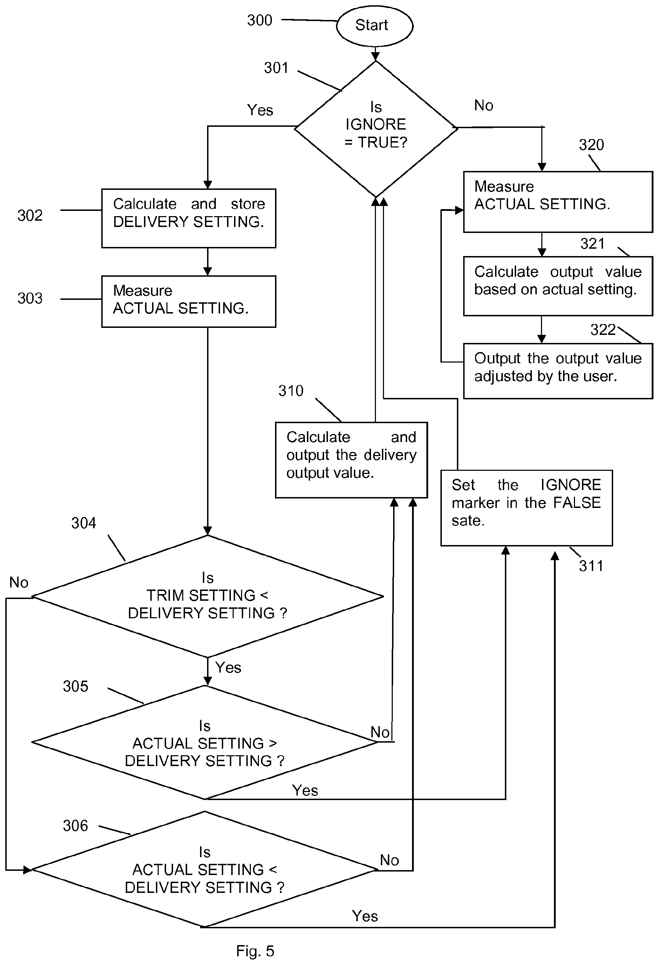

Fig. 5 shows the sequence for operating the appliance 100 according to a further embodiment. The sequence shown in Fig. 5 is mostly the same as the sequence shown in Fig. 4. Different is that process step 309 is replaced by the process steps 304, 305, and 306. In the following, the process steps 304, 305, and 306 are explained in detail, while for the other process steps reference is made to the description of Fig. 4.

In more detail, process step 304 comprises comparing the trim setting 113 with the delivery setting 133. Each of the process steps 305 and 306 comprises comparing the actual setting 134 with the delivery setting 133.

In particular, in the case that in process step 304 is determined that the trim setting 113 is less than the delivery setting 133 and in process step 305 is determined that the actual setting 134 is not greater than the delivery setting 133, then the process proceeds with process step 310. The process proceeds also with process step 310 in the case that in process step 304 is determined that the trim setting 113 is not less than the delivery setting 133 and in process step 306 is determined that the actual setting 134 is not less than the delivery setting 133. Alternatively, the process proceeds with process step 311.

The process steps 304, 305, and 306 enable that the appliance 100 outputs the delivery output value until a user adjusts manually the variable control mechanism according to a predetermined procedure.

The predetermined procedure will be explained by way of an example. The conversion element 133 is a potentiometer having minimum value of 10 V and a maximum value of 20 V. The delivery setting relates, for example, to a potentiometer value of 15 V

According to a first example, the trim setting relates to a potentiometer value of 10 V. In other words, a potentiometer is at a left stop. The user turns the user adjusting element to the right. In other words, the user increases the value of the actual setting. Until the actual setting is not greater than the predetermined delivery setting the appliance is in the delivery state and outputs the predetermined delivery output value.

According to a second example, the trim setting relates to a potentiometer value of 20 V. In other words, a potentiometer is at a right stop. The user turns the user adjusting element to the left. In other words, the user decreases the value of the actual setting. Until the actual setting is not less than the predetermined delivery setting the appliance is in the delivery state and outputs the predetermined delivery output value.

According to this embodiment, the appliance can be manufactured using a potentiometer with a right stop or left stop. Further, the code word is not changed until the variable control mechanism is adjusted by the user and an adjusted value of the variable control mechanism fulfills a predetermined condition.

**Reference Numerals**

| **Reference Numerals** | **Description** |
|---|---|
| 100 | appliance |
| 110 | memory unit |
| 111 | EEPROM |
| 112 | marker |
| 113 | TRIMM SETTING |
| 120 | control unit |
| 121 | processing unit |
| 130 | variable control mechanism |
| 131 | conversion element |
| 132 | user adjusting element |
| 133 | DELIVERY SETTING |
| 134 | ACTUAL SETTING |
| 141 | output |
| 142 | output |

## Claims

1. A method for initializing an appliance (100) in a delivery state, wherein the appliance has at least one adjustable output value, the method comprising the following steps:
providing a control unit (120) connected to a memory unit (110) and providing a variable control mechanism (130), wherein the variable control mechanism is user adjustable for controlling the adjustable output value and wherein the appliance is in the delivery state until a user adjusts the variable control mechanism;
storing a first code word in the memory unit, wherein a predetermined delivery output value of the appliance is associated to the first code word and the first code word is indicating that the appliance is in the delivery state,
**characterized in that:**
the variable control mechanism comprises a user adjusting element (132) which is user adjustable, and a potentiometer (131) for converting a setting adjusted at the user adjusting element to an adjusted value,
sensing, by the control unit, the adjusted value that is supplied by the potentiometer,
comparing, by the control unit, the adjusted value to a trim setting (113), the trim setting being a setting of the variable control mechanism in the delivery state and the trim setting being stored in the memory unit; and
changing, by the control unit, the first code word to a second code word when the variable control mechanism is adjusted by the user and when a relation of the adjusted value and the trim setting fulfills a predetermined condition, the second code word is indicating that the appliance is not in the delivery state.

2. The method of claim 1, wherein the variable control mechanism controls the appliance to output the adjusted output value adjusted by the user, if the first code word is changed to the second code word.

3. The method of claim 2, further comprising the steps of, if the first code word is changed to the second code word:
sensing, by the control unit, an adjusted value that is adjusted at the variable control mechanism, and
calculating, by the control unit, the output value using the adjusted value.

4. The method of claim 1, wherein the control unit controls the appliance to output the predetermined delivery output value, until the first code word is changed.

5. The method of claim 1, wherein each of the trim setting and the adjusted value are compared with a predetermined setting of the variable control mechanism.

6. The method of one of the claims 1 to 5, wherein changing the first code word to the second code word is irreversible.

7. The method of claim 6, wherein the control unit overwrites the first code word with the second code word.

8. The method of one of the claims 1 to 7, wherein the adjustable output value of the appliance is at least one of an output voltage, an output current, an output luminous intensity, and an output light color.

9. An appliance (100) with at least on adjustable output value comprising:
a variable control mechanism (130), a memory unit; and
a control unit (120) connected to the memory unit (110) and the variable control mechanism (130), wherein the variable control mechanism is user adjustable for controlling the adjustable output value, wherein the memory unit is configured to store a first code word, wherein a predetermined delivery output value of the appliance is associated to the first code word and the first code word is indicating that the appliance is in the delivery state,
**characterized in that:**
the variable control mechanism comprises a user adjusting element (132), which is user adjustable, and a potentiometer (131) for converting a setting adjusted at the user
adjusting element to an adjusted value; and
the control unit is configured to:
- sense the adjusted value that is supplied by the potentiometer,
- compare the adjusted value to a trim setting (113), the trim setting being a setting of the variable control mechanism in the delivery state and the trim setting being stored in the memory unit, and
- change the first code word to a second code word when the variable control mechanism is adjusted by the user and when a relation of the adjusted value and the trim setting fulfills a predetermined condition, the second code word is indicating that the appliance is not in the delivery state.

10. The appliance of claim 9, wherein the memory unit comprises an EEPROM (111) for storing the code word.

11. The appliance of one of the claims 9 or 10, wherein the control unit comprises a microcontroller.

## Patentansprüche

1. Verfahren zum Initialisieren eines Geräts (100) in einem Lieferzustand, wobei das Gerät mindestens einen einstellbaren Ausgangswert hat, wobei das Verfahren die folgenden Schritte umfasst:
Bereitstellen einer Steuereinheit (120), die mit einer Speichereinheit (110) verbunden ist und einen Variablensteuermechanismus (130) bereitstellt, wobei der Variablensteuermechanismus vom Benutzer einstellbar ist, um den einstellbaren Ausgangswert zu steuern, und wobei das Gerät sich im Lieferzustand befindet, bis ein Benutzer den Variablensteuermechanismus verstellt;
Speichern eines ersten Codeworts in der Speichereinheit, wobei ein vorbestimmter Lieferausgangswert des Geräts dem ersten Codewort zugeordnet ist und das erste Codewort angibt, dass das Gerät in dem Lieferzustand ist,
**dadurch gekennzeichnet, dass**
der Variablensteuermechanismus ein Benutzerjustierelement (132), das vom Benutzer einstellbar ist, und ein Potentiometer (131) aufweist, um eine Einstellung, die an dem Benutzerjustierelement eingestellt ist, in einen Einstellwert umzuwandeln, ferner mit Erfassen, durch die Steuereinheit, des eingestellten Werts, der von dem Potentiometer geliefert wird,
Vergleichen, durch die Steuereinheit, des eingestellten Werts mit einer Voreinstellung (113), wobei die Voreinstellung eine Einstellung des Variablensteuermechanismus im Lieferzustand ist und wobei die Voreinstellung in der Speichereinheit gespeichert ist; und
Ändern, durch die Steuereinheit, des ersten Codeworts in ein zweites Codewort, wenn der Variablensteuermechanismus von dem Benutzer verstellt wird und eine Beziehung zwischen dem eingestellten Wert und der Voreinstellung eine vorbestimmte Bedingung erfüllt, wobei das zweite Codewort anzeigt, dass das Gerät nicht in dem Lieferzustand ist.

2. Verfahren nach Anspruch 1, wobei der Variablensteuermechanismus das Gerät so steuert, dass es den eingestellten Ausgangswert, der von dem Benutzer eingestellt ist, ausgibt, wenn das erste Codewort in das zweite Codewort geändert wird.

3. Verfahren nach Anspruch 2, das ferner, wenn das erste Codewort in das zweite Codewort geändert wird, die Schritte umfasst:
Erfassen, durch die Steuereinheit, eines eingestellten Werts, der an dem Variablensteuermechanismus eingestellt ist, und
Berechnen, durch die Steuereinheit, des Ausgangswerts unter Anwendung des eingestellten Werts.

4. Verfahren nach Anspruch 1, wobei die Steuereinheit das Gerät so steuert, dass es den vorbestimmten Lieferausgangswert ausgibt, bis das erste Codewort geändert wird.

5. Verfahren nach Anspruch 1, wobei die Voreinstellung und der eingestellte Wert jeweils mit einer vorbestimmten Einstellung des Variablensteuermechanismus verglichen werden.

6. Verfahren nach einem der Ansprüche 1 bis 5, wobei das Ändern des ersten Codeworts in das zweite Codewort irreversibel ist.

7. Verfahren nach Anspruch 6, wobei die Steuereinheit das erste Codewort mit dem zweiten Codewort überschreibt.

8. Verfahren nach einem der Ansprüche 1 bis 7, wobei der einstellbare Ausgangswert des Gerätes eine Ausgangsspannung und/oder ein Ausgangsstrom und/oder eine Ausgangsleuchtstärke und/oder eine Ausgangslichtfarbe ist.

9. Gerät (100) mit mindestens einem einstellbaren Ausgangswert, mit:
einem Variablensteuermechanismus (130),
einer Speichereinheit, und
einer Steuereinheit (120), die mit der Speichereinheit (110) und dem Variablensteuermechanismus (130) verbunden ist, wobei der Variablensteuermechanismus von einem Benutzer einstellbar ist, um den einstellbaren Ausgangswert zu steuern, wobei die Speichereinheit ausgebildet ist, ein erstes Codewort zu speichern, wobei dem ersten Codewort ein vorbestimmter Lieferausgangswert des Geräts zugeordnet ist und das erste Codewort angibt, dass das Gerät in dem Lieferzustand ist,
**dadurch gekennzeichnet, dass**
der Variablensteuermechanismus ein Benutzerjustierelement (132), das von einem Benutzer einstellbar ist, und ein Potentiometer (131) zur Umwandlung einer Einstellung, die an dem Benutzerjustierelement eingestellt ist, in einen eingestellten Wert aufweist; und
die Steuereinheit ausgebildet ist zum:
- Erfassen des eingestellten Werts, der von dem Potentiometer geliefert wird,
- Vergleichen des eingestellten Werts mit einer Voreinstellung (113), wobei die Voreinstellung eine Einstellung des Variablensteuermechanismus in dem Lieferzustand ist, und wobei die Voreinstellung in der Speichereinheit gespeichert ist, und
- Ändern des ersten Codeworts in ein zweites Codewort, wenn der Variablensteuermechanismus durch den Benutzer eingestellt wird und eine Beziehung zwischen dem eingestellten Wert und der Voreinstellung eine vorbestimmte Bedingung erfüllt, wobei das zweite Codewort anzeigt, dass das Gerät in dem Lieferzustand ist.

10. Gerät nach Anspruch 9, wobei die Speichereinheit ein EEPROM (111) zur Speicherung des Codeworts aufweist.

11. Gerät nach Anspruch 9 oder 10, wobei die Steuereinheit eine Mikrosteuerung umfasst.

## Revendications

1. Procédé d'initialisation d'un appareil (100) dans un état de livraison, dans lequel l'appareil a au moins une valeur de sortie ajustable, le procédé comprenant les étapes suivantes consistant à :
fournir une unité de commande (120) connectée à une unité de mémoire (110) et
fournir un mécanisme de commande variable (130), dans lequel le mécanisme de commande variable est ajustable par utilisateur pour commander la valeur de sortie ajustable et dans lequel l'appareil est dans l'état de livraison jusqu'à ce qu'un utilisateur ajuste le mécanisme de commande variable ;
stocker un premier mot de code dans l'unité de mémoire, une valeur de sortie de livraison prédéterminée de l'appareil étant associée au premier mot de code et le premier mot de code indiquant que l'appareil est dans l'état de livraison,
**caractérisé en ce que** :
le mécanisme de commande variable comprend un élément d'ajustement par utilisateur (132) qui est ajustable par utilisateur, et un potentiomètre (131) pour convertir un réglage ajusté au niveau de l'élément d'ajustement par utilisateur en une valeur ajustée,
détecter, par l'unité de commande, la valeur ajustée qui est fournie par le potentiomètre,
comparer, par l'unité de commande, la valeur ajustée à un réglage net (113), le réglage net étant un réglage du mécanisme de commande variable dans l'état de livraison et le réglage net étant stocké dans l'unité de mémoire ; et
changer, par l'unité de commande, le premier mot de code en un second mot de code lorsque le mécanisme de commande variable est ajusté par l'utilisateur et lorsqu'une relation entre la valeur ajustée et le réglage net remplit une condition prédéterminée, le second mot de code indique que l'appareil n'est pas dans l'état de livraison.

2. Procédé selon la revendication 1, dans lequel le mécanisme de commande variable commande l'appareil pour qu'il délivre en sortie la valeur de sortie ajustée par l'utilisateur, si le premier mot de code est changé en le second mot de code.

3. Procédé selon la revendication 2, comprenant en outre les étapes consistant à, si le premier mot de code est changé en le second mot de code :
détecter, par l'unité de commande, une valeur ajustée qui est ajustée au niveau du mécanisme de commande variable, et
calculer, par l'unité de commande, la valeur de sortie en utilisant la valeur ajustée.

4. Procédé selon la revendication 1,
dans lequel l'unité de commande commande l'appareil pour qu'il délivre en sortie la valeur de sortie de livraison prédéterminée, jusqu'à ce que le premier mot de code soit changé.

5. Procédé selon la revendication 1
dans lequel le réglage net et la valeur ajustée sont chacun comparés à un réglage prédéterminé du mécanisme de commande variable.

6. Procédé selon l'une des revendications 1 à 5, dans lequel le changement du premier mot de code en le second mot de code est irréversible.

7. Procédé selon la revendication 6, dans lequel l'unité de commande écrase le premier mot de code par le second mot de code.

8. Procédé selon l'une des revendications 1 à 7, dans lequel la valeur de sortie ajustable de l'appareil est au moins l'un parmi une tension de sortie, un courant de sortie, une intensité lumineuse de sortie, et une couleur de lumière de sortie.

9. Appareil (100) ayant au moins une valeur de sortie ajustable comprenant :
un mécanisme de commande variable (130),
une unité de mémoire ; et
une unité de commande (120) connectée à l'unité de mémoire (110) et au mécanisme de commande variable (130), dans lequel le mécanisme de commande variable est ajustable par utilisateur pour commander la valeur de sortie ajustable, dans lequel l'unité de mémoire est configurée pour stocker un premier mot de code, dans lequel une valeur de sortie de livraison prédéterminée de l'appareil est associée au premier mot de code et le premier mot de code indique que l'appareil est dans l'état de livraison,
**caractérisé en ce que** :
le mécanisme de commande variable comprend un élément d'ajustement par utilisateur (132), qui est ajustable par utilisateur, et un potentiomètre (131) pour convertir un réglage ajusté au niveau de l'élément d'ajustement par utilisateur en une valeur ajustée ; et
l'unité de commande est configurée pour :
- détecter la valeur ajustée qui est fournie par le potentiomètre,
- comparer la valeur ajustée à un réglage net (113), le réglage net étant un réglage du mécanisme de commande variable dans l'état de livraison et le réglage net étant stocké dans l'unité de mémoire, et
- changer le premier mot de code en un second mot de code lorsque le mécanisme de commande variable est ajusté par l'utilisateur et lorsqu'une relation entre la valeur ajustée et le réglage net remplit une condition prédéterminée, le second mot de code indique que l'appareil n'est pas dans l'état de livraison.

10. Appareil selon la revendication 9, dans lequel l'unité de mémoire comprend une EEPROM (111) pour stocker le mot de code.

11. Appareil selon l'une des revendications 9 ou 10, dans lequel l'unité de commande comprend un microcontrôleur.
